Europäisches Patentamt

European Patent Office

Office européen des brevets

(11) Numéro de publication: **0 428 808 A1**

## DEMANDE DE BREVET EUROPEEN

(21) Numéro de dépôt: 89403228.3

(22) Date de dépôt: **22.11.89**

(51) Int. Cl.⁵: **B29D 1/00**, B29C 53/58, B29D 23/22

(43) Date de publication de la demande: **29.05.91 Bulletin 91/22**

(84) Etats contractants désignés: **CH DE ES FR GB GR IT LI**

(71) Demandeur: **COMPAGNIE FRANCAISE POUR LE DEVELOPPEMENT DE LA GEOTHERMIE ET DES ENERGIES NOUVELLES SOCIETE ANONYME : Tour Mirabeau 39-43 Quai André Citröen F-75015 Paris(FR)**

(72) Inventeur: **Stradi, Bernard La Mazure F-44520 Isse(FR)**

(74) Mandataire: **Bruder, Michel et al Cabinet Michel Bruder Conseil en Brevets 10, rue de la Pépinière F-75008 Paris(FR)**

(54) Procédé de fabrication d'un tube en matériau composite du type fibres/résine et tube obtenu par la mise en oeuvre de ce procédé.

(57) La présente invention concerne un procédé pour fabriquer un tube en matériau composite du type fibres/résine, à parties extrêmes mâle et femelle filetées de mêmes dimensions, on enroule en hélice, sur un mandrin longitudinal (1), une nappe de fibres imprégnées de résine et on chauffe ensuite la nappe de fibres enroulée en hélice de manière à provoquer la polymérisation de la résine et le durcissement du tube. Pour faciliter la fabrication du tube on utilise un mandrin (1) présentant une partie extrême rétreinte (1a) par rapport au reste du mandrin (1), en vue de la formation, à cet endroit, de la partie extrême mâle filetée du tube en place, et on engage, sur l'autre partie extrême du mandrin, un manchon coulissant coaxial (3) dont la partie extrême qui est dirigée vers le centre du mandrin (1), présente un filetage (4) destiné à former la partie extrême femelle filetée du tube à fabriquer.

Fig. 1

La présente invention concerne un procédé de fabrication d'un tube en matériau composite du type fibres/résine à parties extrêmes mâle et femelle filetées, ainsi qu'un tube obtenu par la mise en oeuvre de ce procédé.

Actuellement on utilise couramment dans diverses branches de l'industrie, à la place de tubes en acier, des tubes en matériau composite du type fibres résine qui présentent l'avantage de résister à la corrosion due à l'action agressive des fluides s'écoulant à travers ces tubes. Ces tubes connus en matériau composite sont fabriqués en général par enroulement hélicoïdal, sur un mandrin longitudinal, d'une nappe de fibres imprégnées de résine et polymérisation à chaud ultérieure de la résine imprégnant les fibres de la nappe. Au cours de la fabrication on forme respectivement, aux deux extrémités de chaque tube, une partie filetée mâle et une partie filetée femelle pouvant être vissées l'une dans l'autre afin de raccorder entre eux les différents tube d'une succession de tubes.

La présente invention concerne un procédé de fabrication de tels tubes permettant d'obtenir très aisément, au cours d'un petit nombre d'étapes facilement mises en oeuvre, les différentes parties constitutives essentielles du tube devant assumer des fonctions différentes.

A cet effet ce procédé de fabrication d'un tube en matériau composite du type fibres/résine, à parties extrêmes mâle et femelle filetées de mêmes dimensions, de manière à permettre le raccordement de tubes successifs par vissage de leurs parties mâle filetées dans les parties femelle filetées de tubes adjacents, dans lequel on enroule en hélice, sur un mandrin longitudinal, une nappe de fibres imprégnées de résine et on chauffe ensuite la nappe de fibres enroulée en hélice de manière à provoquer la polymérisation de la résine et le durcissement du tube, est caractérisé en ce qu'on utilise un mandrin présentant une partie extrême rétreinte par rapport au reste du mandrin, en vue de la formation, à cet endroit, de la partie extrême mâle filetée du tube en place, on engage, sur l'autre partie extrême du mandrin, un manchon coulissant coaxial dont la partie extrême qui est dirigée vers le centre du mandrin, présente un filetag destiné à former la partie extrême femelle filetée du tube à fabriquer, on bloque en translation et en rotation le manchon sur le mandrin, on enroule la nappe de fibres imprégnées de résine sur toute la longueur du mandrin y compris sur le manchon et sur la partie rétreinte, en formant plusieurs couches superposées, et après chauffage à la température de polymérisation et durcissement de la résine, on extrait le mandrin par traction longitudinale de ce mandrin à travers le tube brut obtenu et le manchon encore en place dans le tube, on dévisse ce manchon de la partie extrême femelle du tube qui a été formée sur le filetage du manchon et, on coupe le tube à la longueur désirée on usine sur la partie extrême mâle d'épaisseur renforcée, qui a été formée sur la partie rétreinte du mandrin, un filetage externe contituant la partie extrême mâle du tube.

L'invention à également pour objet un tube en matériau composite fabriqué par le procédé précité.

On décrira ci-après, à titre d'exemple non limitatif, une forme d'exécution de la présente invention, en référence au dessin annexé sur lequel :

Les figures 1 à 15 sont des vues en élévation schématiques illustrant les diverses étapes du procédé de fabrication d'un tube en matériau composite du type fibre de verre/résine, suivant l'invention.

La figure 16 est une vue en élévation, partiellement en coupe longitudinale, d'un tube en matériau composite obtenu par le procédé suivant l'invention.

Le procédé de fabrication suivant l'invention utilise un mandrin cylindrique horizontal 1, de section droite circulaire, d'un diamètre défini a correspondant au diamètre interne du tube devant être fabriqué, ce mandrin 1 étant prolongé, à l'une de ses extrémités longitudinales, par une partie extrême rétreinte 1a de plus petit diamètre b. Ce mandrin 1 est monté à rotation sur un support approprié non représenté et il est entraîné en rotation, autour de son axe horizontal, pendant le processus de fabrication, par un moteur approprié 2, auquel il est accouplé d'une manière connue en soi. Avant le démarrage de la première étape du procédé on équipe le mandrin 1, dans sa partie extrême 1b opposée à sa partie rétreinte 1a et qui est accouplée au moteur 2, d'un manchon coulissant coaxial 3 dont la partie extrême qui est dirigée vers le centre du mandrin 1, présente un filetage 4. Ce filetage 4 qui est du type droit ou encore légèrement conique comme il est représenté sur le dessin, est destiné à la formation d'une tulipe filetée femelle dans une extrémité du tube final, comme il sera précisé plus loin. Le manchon fileté 3 est accouplé au mandrin 1, au moyen d'une goupille diamétrale 5 traversant le manchon 3 et le mandrin 1, si bien que la manchon 3 est entrainé en rotation conjointement avec le mandrin 1 et il est immobilisé en translation sur ce mandrin.

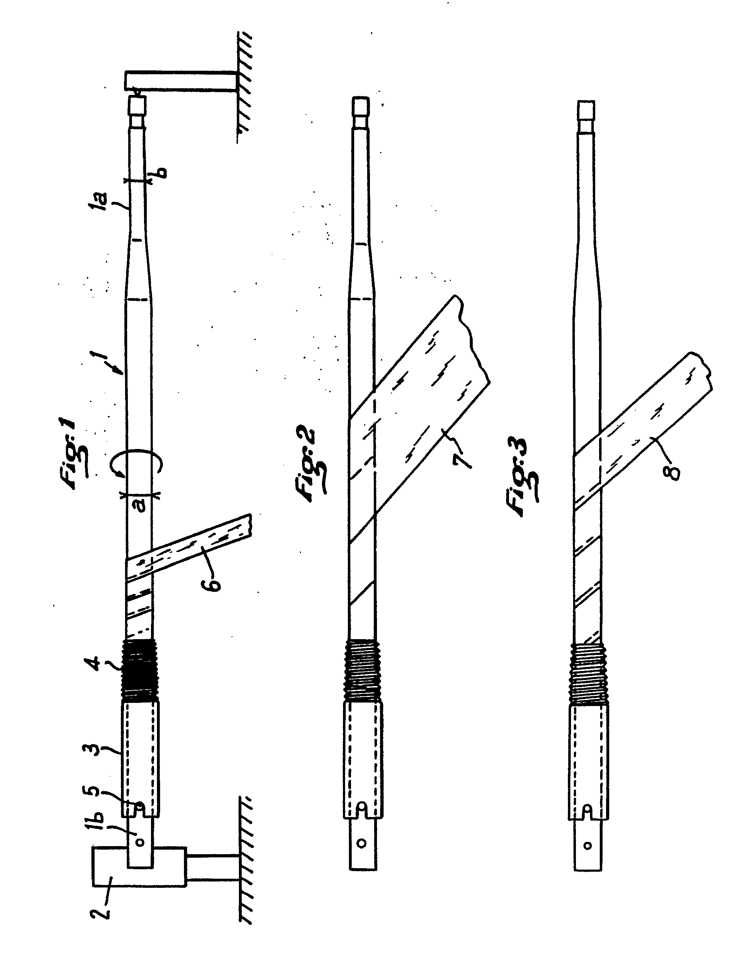

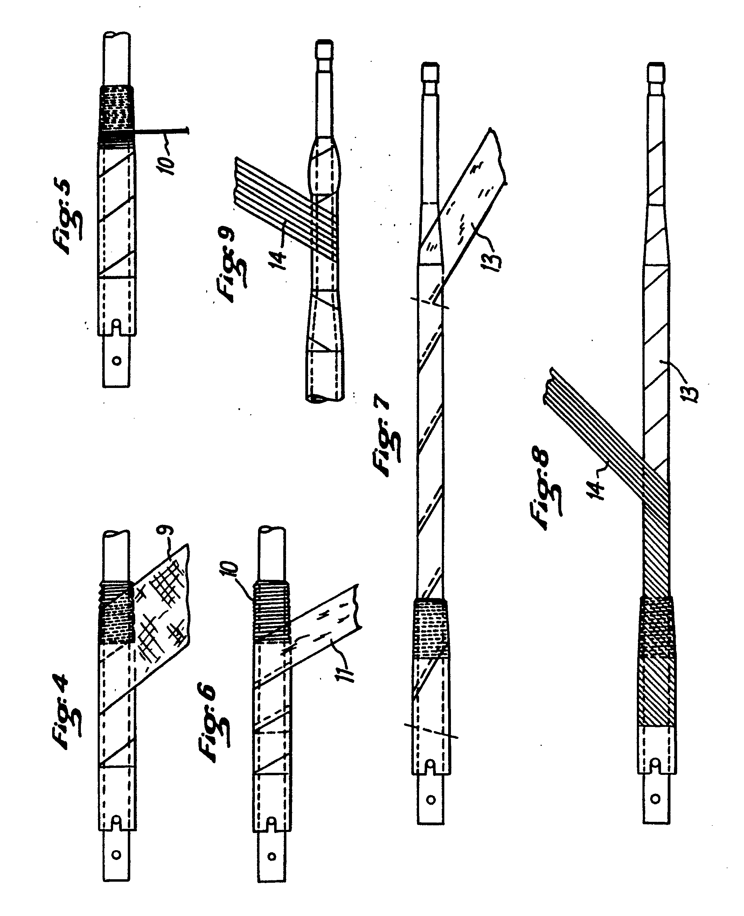

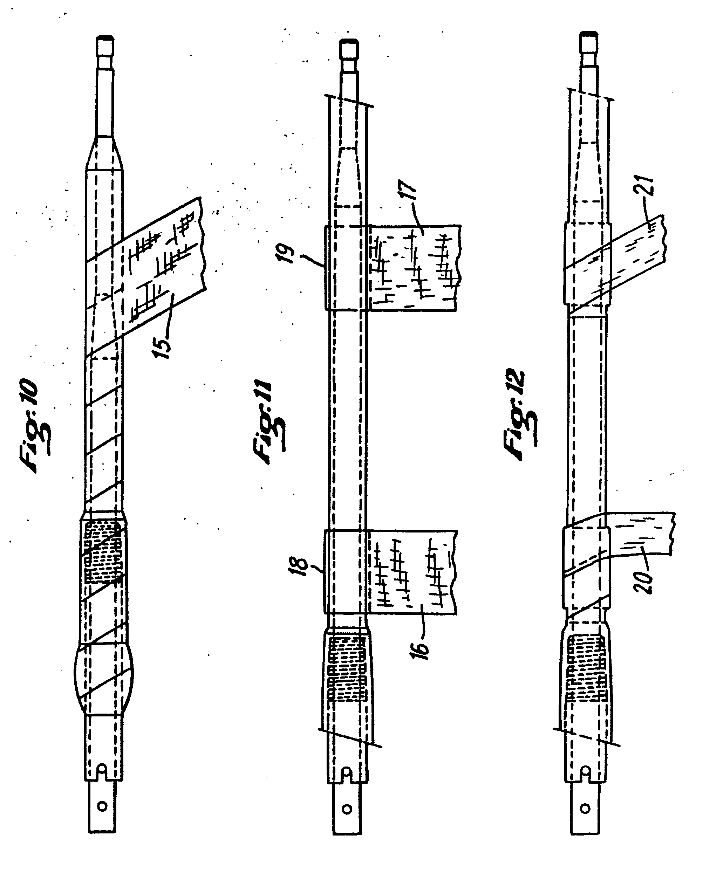

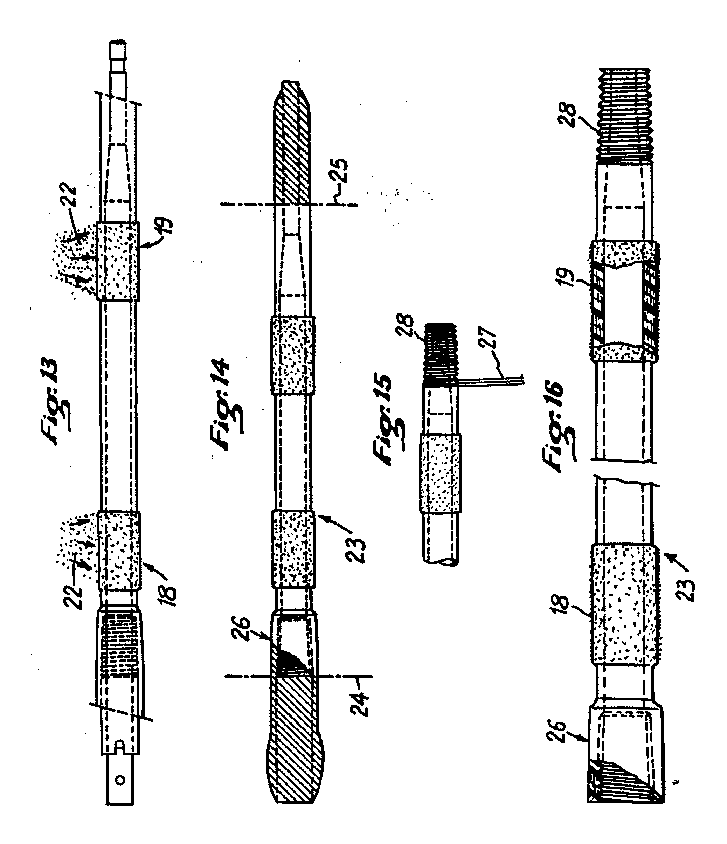

Après une mise à la température appropriée dépendant de la résine utilisée et du processus de fabrication, on procède tout d'abord au dépôt d'une fine couche d'agent de démoulage spécial haute température sur toute la surface du mandrin 1. Ensuite on commence par fabriquer une couche de protection interne du tube. A cet effet ainsi qu'il est représenté sur la figure 1, on pose sur le mandrin 1 un film polyester 6 en l'enroulant en hélice, avec un chevauchement partiel, des spires successives de l'hélice, depuis le dernier filet du filetage 4 du manchon 3 jusqu'à l'extrémité de la partie rétreinte 1a du mandrin 1. On applique ensuite, une couche d'un mélange résine-durcisseur, en un pourcentage déterminé, sur la surface du mandrin gainé du film polyester hélicoïdal 6.On applique après cela, sur la couche de mélange résine-durcisseur, un voile de surface 7 enroulé en hélice, avec un recouvrement à 50%, ce voile étant adapté au type de résine utilisé. Cette étape du procédé est illustrée sur la figure 2. A la suite de cette opération d'enroulement on applique une nouvelle couche de mélange résine-durcisseur sur le voile de surface 7 enroulé en hélice. Par dessus cette couche de mélange résine-durcisseur on applique un second voile de surface 8 en formant une hélice à recouvrement de 10% comme il est représenté sur la figure 3. On chauffe ensuite le manchon 3 à partie extrême filetée 4 pour le porter à une température appropriée, on dépose une couche d'agent de démoulage sur ce manchon 3, puis une couche de mélange résine-durcisseur et on recouvre le manchon d'un voile de surface 9 (figure 4) formant un enroulement hélicoïdal à recouvrement de 50%. On enroule ensuite sur le filetage 4, comme il est représenté sur la figure 5, un fil de verre 10 de manière que ce fil suive étroitement les filets du filetage 4, en s'engageant dans la gorge hélicoïdale de celui-ci. Le fil de verre 10 est choisi en un matériau adapté à la résine et au diamètre du tube obtenu finalement. L'enroulement hélicoïdal du fil de verre 10 s'effectue avec une imprégnation simultanée de résine. A la fin de cette étape d'enroulement du fil de verre 10, le filetage 4 du manchon 3 est totalement recouvert d'un enroulement hélicoïdal du fil de verre 10, comme il apparaît sur la figure 6. On applique alors sur le manchon 3 un second voile de surface 11 en formant un enroulement hélicoïdal à recouvrement de 10%, le voile hélicoïdal 11 s'étendant sur la totalité du manchon 3 et de sa partie extrême filetée 4. On procède ensuite à une prégélification de l'ensemble de ces couches de protection interne du tube à fabriquer, à une température et pendant une durée dépendant du type de résine utilisée, et ce par tout moyen de polymérisation approprié. On vérifie l'état et le stade de polymérisation de la couche ainsi obtenue et on procéde à un léger ponçage de celle-ci.

Après les étapes illustrées sur les figures 1 à 6 et qui conduisent à la fabrication d'une couche de protection interne du tube à fabriquer, on passe à la fabrication de la structure mécanique proprement dite du tube. Cette fabrication commence par la pose, sur la totalité du tube, d'un voile de liaison 13 formant un enroulement hélicoïdal à recouvrement de 10%, comme il est représenté sur la figure 7. On enroule ensuite, sur le voile de liaison hélicoïdal 13, comme il est représenté sur la figure 8, une nappe 14, de largeur déterminée à l'avance, de fils de verre imprégnés de résine, suivant un angle adapté aux conditions de mise en oeuvre. Cette étape d'enroulement de la nappe 14 est commencée à partir du côté rétreint 1a du mandrin 1 et elle est effectuée sur toute la longueur de ce mandrin 1, en effectuant un certain nombre d'allers et de retours se traduisant par la création de plusieurs couches hélicoïdales superposées et croisées de la nappe 14. L'angle d'enroulement et le nombre des couches sont déterminés en fonction du type de tube à fabriquer et des caractéristiques mécaniques et chimique qu'il doit présenter. Une fois terminé l'enroulement hélicoïdal de la nappe 14, en plusieurs couches, sur toute la longueur du mandrin 1 terminé, on enroule cette même nappe de fils 14, comme il est représenté sur la figure 9, sur la partie rétreinte 1a du mandrin afin de créer à cet endroit une épaisseur suffisante pour l'usinage ultérieur du filetage de la partie mâle du tube comme on le verra plus loin. On effectue ensuite un contrôle au gabarit de la surépaisseur obtenue et ceci achève la phase de la fabrication de la structure mécanique du tube.

On procède ensuite à la fabrication de la couche de protection externe du tube. A cet effet on applique un voile de surface 15, ainsi qu'il est représenté sur la figure 10, en formant un enroulement hélicoïdal à recouvrement de 50%, sur la totalité de la surface externe du tube en cours de fabrication. Après cela on pose, comme il est représenté sur la figure 11, des bandes 16,17 de tissu de verre imprégné de résine, de largeur définie, à proximité des extrémités mâle et femelle du tube en cours de fabrication c'est-à-dire droite et gauche sur le dessin. On enroule concentriquement les bandes 16 et 17, de manière à former une superposition de trois à cinq couches suivant les cas. Les surépaisseurs ainsi obtenues sont destinées à constituer des bourrelets cylindriques 18,19 de renfort pour le serrage du tube au moyen d'une clé à sangle, lors du montage d'un train de tubes. On pose ensuite, sur les bourrelets de renfort 18,19, des voiles de surfaces 20,21 formant des enroulements hélicoïdaux (figure 12). On dépose ensuite des grains de matériau solide 22, tel que du sable, sur les bourrelets de renfort 18,19, ce sable adhérant aux surface des bourrelets de renfort 18,19, grâce à la résine d'imprégnation encore liquide, de manière à rendre rugueuses leurs surfaces. On chauffe ensuite l'ensemble du mandrin et du tube brut formé sur ce mandrin à la suite des étapes précédentes, à une température appropriée en fonction de la résine utilisé, afin de faire polymériser cette résine. La durée de la polymérisation dépénd également du tube de résine utilisée.

Une fois le tube durci on extrait le mandrin 1 par traction longitudinale du mandrin à travers le tube brut obtenu et le manchon 3, on dévisse ensuite le manchon 3 de la partie extrême femelle du tube qui a été formée sur le filetage 4 et on obtient un tube brut 23 tel que représenté sur la figure 14. On met à la longueur appropriée le tube 23 en coupant ses deux parties extrêmes suivant des plans transversaux 24,25. Le plan transversal de coupe 24 se trouve exactement à l'endroit du départ du filetage interne de la tulipe femelle 26 du tube qui a été formée à l'emplacement du filetage 4 du mandrin 3. L'autre plan de coupe transversal 25 peut être situé à une distance du plan de coupe 24 variable en fonction de la longueur du tube.

On procède ensuite à une post-cuisson du tube 23 suivant le type de résine utilisé puis on usine, à l'aide d'une machine appropriée, au moyen d'un outil diamanté 27, comme il est représenté sur la figure 15, un filetage externe 28, destiné à constituer la partie extrême mâle du tube. Ce filetage 28 peut être cylindrique ou conique et ses dimensions sont les mêmes que celles du filetage interne de la tulipe femelle 26 de manière à permettre le raccord successif des tubes par vissage les uns dans les autres.

La figure 16 représente le tube en matériau composite obtenu par le procédé suivant l'invention et qui comprend, à ses deux extrémités respectives, la tulipe femelle 26 et le filetage mâle 28 et, au voisinage de ceux-ci, les bourrelets de renforts intégraux 18,19 à surfaces externes rendues rugueuses par incorporation de sable dans la résine d'imprégnation.

## Revendications

1.- Procédé de fabrication d'un tube en matériau composite du type fibres/résine, à parties extrêmes mâle et femelle filetées de mêmes dimensions, de manière à permettre le raccordement de tubes successifs par vissage de leurs parties mâle filetées dans les parties femelle filetées de tubes adjacents, dans lequel on enroule en hélice, sur un mandrin longitudinal (1), une nappe de fibres (14) imprégnées de résine et on chauffe ensuite la nappe de fibres enroulée en hélice de manière à provoquer la polymérisation de la résine et le durcissement du tube, caractérisé en ce qu'on utilise un mandrin (1) présentant une partie extrême rétreinte (1a) par rapport au reste du mandrin (1), en vue de la formation, à cet endroit, de la partie extrême mâle filetée du tube en place, on engage, sur l'autre partie extrême du mandrin, un manchon coulissant coaxial (3) dont la partie extrême qui est dirigée vers le centre du mandrin (1), présente un filetage (4) destiné à former la partie extrême femelle filetée du tube à fabriquer, on bloque en translation et en rotation le manchon (3) sur le mandrin (1), on enroule la nappe de fibres (14) imprégnées de résine sur toute la longueur du mandrin y compris sur le manchon (3) et sur la partie rétreinte (1a), en formant plusieurs couches superposées, et après chauffage à la température de polymérisation et durcissement de la résine, on extrait le mandrin (1) par traction longitudinale de ce mandrin à travers le tube brut obtenu et le manchon (3) encore en place dans le tube, on dévisse ce manchon (3) de la partie extrême femelle du tube qui a été formée sur le filetage (4) du manchon (3) et, on coupe le tube (23) à la longueur désirée on usine sur la partie extrême mâle d'épaisseur renforcée, qui a été formée sur la partie rétreinte (1a) du mandrin (1), un filetage externe (28) contituant la partie extrême mâle du tube.

2.- Procédé suivant la revendication 1 caractérisé en ce qu'on forme sur le mandrin (1), avant l'enroulement hélicoïdal de la nappe de fibres de verre (14), une couche de protection interne du tube à réaliser par pose en hélice d'au moins un voile de surface (7,8,9) avec un recouvrement partiel des spires formées.

3.- Procédé suivant la revendication 2 caractérisé en ce qu'avant la pose du ou des voiles de surface hélicoïdaux (7,8,9) on enroule en hélice sur le mandrin (1) un film polyester (6) avec un chevauchement partiel des spires successives de l'hélice, depuis le dernier filet du filetage (4) du manchon (3) jusqu'à l'extrémité de la partie rétreinte (1a) du mandrin (1), et on applique ensuite une couche d'un mélange résine-durcisseur sur la surface du mandrin gainé du film polyester hélicoïdal (6).

4.- Procédé suivant l'une quelconque des revendications 2 et 3 caractérisé en ce qu'on applique un voile de surface (7) enroulé en hélice, on applique une couche de mélange résine-durcisseur sur le voile de surface (7) enroulé en hélice et par dessus cette couche de mélange résine-durcisseur on applique un second voile de surface (8) en formant une hélice à recouvrement partiel des spires.

5.- Procédé suivant l'une quelconque des revendications 2 à 4 caractérisé en ce qu'on chauffe ensuite le manchon (3) à partie extrême filetée (4), on dépose une couche d'agent de démoulage sur ce manchon (3), puis une couche de mélange résine-durcisseur, on recouvre le manchon d'un voile de surface (9) formant un enroulement hélicoïdal, on enroule ensuite, sur le filetage (4), un fil de verre (10) de manière que ce fil suive étroitement les filets du filetage (4), en s'engageant dans la gorge hélicoïdale de celui-ci, l'enroulement hélicoïdal du fil de verre (10) s'effectuant avec une imprégnation simultanée de résine si bien qu'à la fin de cette étape d'enroulement du fil de verre

(10), le filetage (4) du manchon (3) est totalement recouvert d'un enroulement hélicoïdal du fil de verre (10), on applique alors sur le manchon (3) un second voile de surface (11) en formant un enroulement hélicoïdal s'étendant sur la totalité du manchon 3 et de sa partie extrême filetée 4 et on procède ensuite à une prégélification de l'ensemble de ces couches de protection interne du tube à fabriquer, à une température et pendant une durée dépendant du type de résine utilisée.

6.- Procédé suivant la revendication 5 caractérisé en ce qu'on applique ensuite, sur la totalité du tube, un voile de liaison (13) formant un enroulement hélicoïdal à recouvrement partiel, on enroule ensuite, sur le voile de liaison hélicoïdal (13), une nappe 14 de fils de verre imprégnés de résine, suivant un angle adapté aux conditions de mise en oeuvre, cette étape d'enroulement de la nappe (14) étant effectuée sur toute la longueur du mandrin 1, en effectuant un certain nombre d'allers et de retours se traduisant par la création de plusieurs de couches hélicoïdales superposées et croisées de la nappe (14).

7.- Procédé suivant la revendication 6 caractérisé en ce qu'une fois terminél'enroulement hélicoïdal de la nappe (14), en plusieurs couches, sur toute la longueur du mandrin (1), on enroule cette même nappe de fils (14) sur la partie rétreinte (1a) du mandrin afin de créer à cet endroit une épaisseur suffisante pour l'usinage ultérieur du filetage de la partie mâle du tube.

8.- Procédé suivant la revendication 7 caractérisé en ce qu'on fabrique ensuite une couche de protection externe du tube en appliquant un voile de surface (15), formant un enroulement hélicoïdal à recouvrement partiel, sur la totalité de la surface externe du tube en cours de fabrication, et après cela on pose des bandes (16,17) de tissu de verre imprégné de résine, de largeur définie, à proximité des extrémités mâle et femelle du tube en cours de fabrication, on enroule concentriquement ces bandes (16,17), de manière à former une superposition de plusieurs couches, les surépaisseurs ainsi obtenues étant destinées à constituer des bourrelets cylindriques de renfort (18,19) pour le serrage du tube et on pose ensuite, sur les bourrelets de renfort (18,19), des voiles de surfaces (20,21) formant des enroulements hélicoïdaux.

9.- Procédé suivant la revendication 8 caractérisée en ce qu'on dépose des grains de matériau solide (22), tel que du sable, sur les bourrelets de renfort (18,19), ce sable adhérant aux surface des bourrelets de renfort (18,19), grâce à la résine d'imprégnation encore liquide, de manière à rendre rugueuses leurs surfaces.

10.- Tube en matériau composite du type fibres/résine, à enroulement hélicoïdal de nappes de fibres imprégnées de résine polymérisée, à parties extrêmes mâle et femelle filetées de mêmes dimensions, caractérisé en ce qu'il comprend, au voisinage de ses parties extrêmes présentant les filetages mâle (28) et femelle (26), deux bourrelets de renfort cylindriques respectifs (18,19) à surface externe rendue rugueuse par incorporation de grains de matériau solide, tel que du sable, dans la résine d'imprégnation.

EP 0 428 808 A1

*Fig. 1*

*Fig. 2*

*Fig. 3*

EP 0 428 808 A1

Fig. 4

9

Fig. 5

10

Fig. 6

10

11

Fig. 9

14

Fig. 7

13

Fig. 8

14

13

Fig. 10

Fig. 11

Fig. 12

EP 0 428 808 A1

Fig. 13

Fig. 14

Fig. 15

Fig. 16

EP 0 428 808 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>A | US-A-3 673 029 (McLARTY)<br>--- | 1<br>10 | B 29 D   1/00<br>B 29 C  53/58<br>B 29 D  23/22 |
| X<br>A | US-A-3 572 392 (McLARTY)<br>--- | 1<br>10 | |
| A | PATENT ABSTRACTS OF JAPAN, vol. 7, no. 173 (M-232)[1318], 30th July 1983; & JP-A-58 076 218 (TOUKIYOU GIEI K.K.) 09-05-1983<br>--- | 1,10 | |
| A | FR-A-1 377 358 (ROCK ISLAND)<br>* Fig. *<br>--- | 1,8,10 | |
| A | US-A-2 629 894 (BOGGS)<br>----- | | |

|  |  |  |
|---|---|---|
|  |  | TECHNICAL FIELDS SEARCHED (Int. Cl.5)<br><br>B 29 C<br>B 29 D<br>F 16 L |

The present search report has been drawn up for all claims

| Place of search | Date of completion of the search | Examiner |
|---|---|---|
| THE HAGUE | 26-07-1990 | KUHN E.F.E. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P0401)